# EUROPEAN PATENT APPLICATION

(11) **EP 4 459 259 A1**
(43) Date of publication of application: **06.11.2024**
(21) Application number: 23749522.1
(22) Date of filing: 18.01.2023
(51) Int. Cl.: G01N 15/02

(54) **PARTICLE SIZE DISTRIBUTION MEASURING DEVICE, PARTICLE SIZE DISTRIBUTION MEASURING METHOD, PROGRAM FOR PARTICLE SIZE DISTRIBUTION MEASURING DEVICE, AND KIT FOR PARTICLE SIZE DISTRIBUTION MEASURING DEVICE**

(30) Priority: 04.02.2022 JP 2022016255
(71) Applicant: HORIBA, Ltd., Kyoto-shi Kyoto 601-8510 (JP)
(72) Inventor: TATEWAKI, Yasuhiro, Kyoto-shi, Kyoto 601-8510 (JP)
(74) Representative: Isarpatent
(86) International application number: PCT/JP2023/001312
(87) International publication number: WO 2023/149206

(57) **Abstract**

A particle size distribution measuring device including: a measurement cell including a sample accommodation space that accommodates a sample obtained by dispersing a plurality of particles in a dispersion medium; a stirring means that stirs the sample by sucking and discharging the sample in the measurement cell; a light irradiation unit that irradiates the sample in the measurement cell with light; a light detection unit that detects scattered light or fluorescent light generated from the sample in the measurement cell; and an analysis unit that measures a particle size distribution of a particle group including the plurality of particles using a detection signal obtained by the light detection unit.

## Description

### Technical Field

The present invention relates to a particle size distribution measuring device, a particle size distribution measuring method, a program for a particle size distribution measuring device, and a kit for a particle size distribution measuring device that measure a particle size distribution of a particle group including a plurality of particles dispersed in a dispersion medium.

### Background Art

As a conventional particle size distribution measuring device, a device using a measuring method called a particle tracking analysis method (PTA method) is known (for example, Patent Literature 1). In this PTA method, a particle size distribution is measured by calculating a diffusion rate due to Brownian motion of particles on the basis of imaging data obtained by imaging the particles in a cell.

### Citation List

### Patent Literature

Patent Literature 1: JP 2020-204604 A

### Summary of Invention

### Technical Problem

By the way, in the PTA method described above, for example, in a case where the particles in a sample are thin, an operation of stirring the sample in the measurement cell and measuring a particle size distribution again after the measurement of the particle size distribution is repeated, so that the number of measurements may be increased (that is, the number of particles to be measured may be increased) to improve the measurement accuracy.

Conventionally, a stirrer such as a magnetic stirrer may be used for stirring the sample in the measurement cell. In this case, it is necessary to inject an extra sample into the measurement cell by a space in which the stirrer rotates. Therefore, there is a problem that it is difficult to apply the stirrer to a sample required to be measured in a minute volume such as a biological sample containing cells. Such a problem is not limited to the measurement of the particle size distribution using the PTA method, and the same can be said for the measurement of the particle size distribution by other methods such as a laser diffraction/scattering method.

The present invention has been made to solve the above problems, and a main object thereof is to enable even a small amount of sample to be stirred in a measurement cell in particle size distribution measurement.

### Solution to Problem

That is, a particle size distribution measuring device according to the present invention includes: a measurement cell including a sample accommodation space that accommodates a sample obtained by dispersing a plurality of particles in a dispersion medium; a stirring means that stirs the sample by sucking and discharging the sample in the sample accommodation space; a light irradiation unit that irradiates the sample in the sample accommodation space with light; a light detection unit that detects scattered light or fluorescent light generated from the sample irradiated with light; and an analysis unit that measures a particle size distribution of a particle group including the plurality of particles using a detection signal obtained by the light detection unit.

With such a configuration, the sample is stirred using the stirring means capable of suction and discharge, such as a pipette, for example, and the sample may be accommodated in the sample accommodation space of the measurement cell in such an amount that the port for performing suction and discharge is immersed, so that even a small amount of sample can be stirred in the measurement cell.

In addition, since the sample is gently stirred by performing suction and discharge, stress applied to the particles in the sample can be reduced as compared with, for example, a case where the sample is stirred using a stirrer. Therefore, the present invention can also be applied to a biological sample in which measurement with a minute volume is required and stress applied during stirring is desirably suppressed. Moreover, since a stirrer which is a magnet is not used, the present invention can also be applied to a sample including a magnetic body.

In order to enable stirring of the sample by the stirring means and measurement of the particle size distribution by the analysis unit to be performed by a sequence, it is preferable to further include an operation control unit that controls a suction operation and a discharge operation by the stirring means.

Furthermore, the particle size distribution measuring device is preferably configured to repeat stirring of the sample by the stirring means and measurement of the particle size distribution by the analysis unit a plurality of times.

In this way, by repeating the stirring of the sample and the measurement of the particle size distribution, the number of measurements may be increased (that is, the number of particles to be measured may be increased) to improve the measurement accuracy.

A specific aspect of the stirring means includes one configured using a pipette.

In this case, the sample in the measurement cell can be sucked and discharged and stirred by pipetting with the pipette.

Furthermore, preferably, the particle size distribution measuring device further includes an attachment jig that attaches the pipette to the measurement cell, and the pipette is held by the attachment jig such that a distal end of a tip of the pipette is located in the sample accommodation space.

In this way, for example, by injecting the sample into the measurement cell using the pipette and setting the pipette in the particle size distribution measuring device together with the measurement cell, the pipette can be used as it is for stirring the sample, and mixing of foreign matters and impurities can be prevented.

In this case, the attachment jig preferably includes a guide mechanism that guides a suction/discharge port of the pipette to suck and discharge the sample toward a predetermined position in the sample accommodation space when the pipette is attached.

In this way, since the suction/discharge port of the pipette can be located at a predetermined position in the sample accommodation space by attaching the pipette to the attachment jig, it is possible to save time and effort for a user to perform positioning by himself/herself.

Examples of an aspect in which the above-described effect of the present invention is remarkably exhibited include an aspect in which a volume of the sample accommodation space is less than or equal to 10 µL, and an aspect in which the sample is a biological sample.

Furthermore, a particle size distribution measuring method of the present invention is a method of measuring a particle size distribution of a particle group including a plurality of particles in a sample accommodated in a measurement cell, the method including: a stirring step of stirring the sample by sucking and discharging the sample in the measurement cell; a light irradiation step of irradiating the sample in the measurement cell with light; a light detection step of detecting scattered light or fluorescent light generated from the sample irradiated with light; and an analysis step of measuring a particle size distribution of the particle group using a detection signal obtained by the light detection unit.

Such a particle size distribution measuring method can achieve operational effects similar to those of the particle size distribution measuring device described above.

From the viewpoint of improving the measurement accuracy, in the method of measuring a particle size distribution, the stirring step, the light detection step, and the analysis step are preferably repeated a plurality of times for the same sample.

Furthermore, from the viewpoint of preventing contamination, it is preferable that the method of measuring a particle size distribution further includes: a sample injection step of injecting the sample into the measurement cell using a pipette; and an installation step of installing the pipette and the measurement cell at a predetermined measurement position, and in the stirring step, the sample is stirred by pipetting using the pipette.

Furthermore, a program for a particle size distribution measuring device according to the present invention is a program for a particle size distribution measuring device including: a measurement cell including a sample accommodation space that accommodates a sample obtained by dispersing a plurality of particles in a dispersion medium; a stirring means that stirs the sample by sucking and discharging the sample in the sample accommodation space; a light irradiation unit that irradiates the sample in the sample accommodation space with light; a light detection unit that detects scattered light or fluorescent light generated from the sample irradiated with light; and an analysis unit that measures a particle size distribution of a particle group including the plurality of particles using a detection signal obtained by the light detection unit, the program causing a computer to exhibit a function as a stirring operation control unit that controls an operation of suction and discharge of the sample by the stirring means.

With such a configuration, it is possible to achieve operational effects similar to those of the particle size distribution measuring device of the present invention described above.

Furthermore, a kit for a particle size distribution measuring device of the present invention is a kit for a particle size distribution measuring device that measures a particle size distribution of a particle group including a plurality of particles dispersed in a dispersion medium, the kit including: a measurement cell including a sample accommodation space that accommodates a sample obtained by dispersing the particle group in a dispersion medium; and an attachment jig that attaches a pipette to the measurement cell such that a distal end of a tip of the pipette is located in the sample accommodation space.

Such a kit for a particle size distribution measuring device can be suitably used for the above-described particle size distribution measuring device. Advantageous Effects of Invention

According to the present invention configured as described above, even a small amount of sample can be stirred in a measurement cell in particle size distribution measurement.

### Brief Description of Drawings

FIG. 1 is a diagram schematically illustrating an overall configuration of a particle size distribution measuring device of the present embodiment.
FIG. 2 is a perspective view illustrating a configuration in which a stirring means is attached to a measurement cell of the embodiment via an attachment jig.
FIG. 3 is a perspective view illustrating a configuration of the measurement cell of the embodiment.
FIG. 4 is a plan view of the measurement cell of the embodiment as viewed from an imaging direction.
FIG. 5 is an exploded perspective view illustrating the measurement cell, the attachment jig, and the stirring means of the embodiment.
FIG. 6 is a diagram in which the measurement cell and the stirring means of the embodiment are set in a housing of the particle size distribution measuring device.
FIG. 7 is a flowchart illustrating an operation of the particle size distribution measuring device of the embodiment.
FIG. 8 is a perspective view illustrating a configuration of a measurement cell of another embodiment.

### Description of Embodiments

Hereinafter, a particle size distribution measuring device 100 according to an embodiment of the present invention will be described with reference to the drawings.

The particle size distribution measuring device 100 according to the present embodiment utilizes the principle of a so-called particle tracking analysis method (PTA method), and is configured to measure a particle size distribution of a group of particles contained in a sample by irradiating a liquid sample in a measurement cell with laser light and tracking Brownian motion of each particle of each particle in the sample at that time. The particle size distribution measuring device 100 is configured to enhance reproducibility of a measurement result by repeating stirring and measurement of the same sample accommodated in a measurement cell 1 a plurality of times.

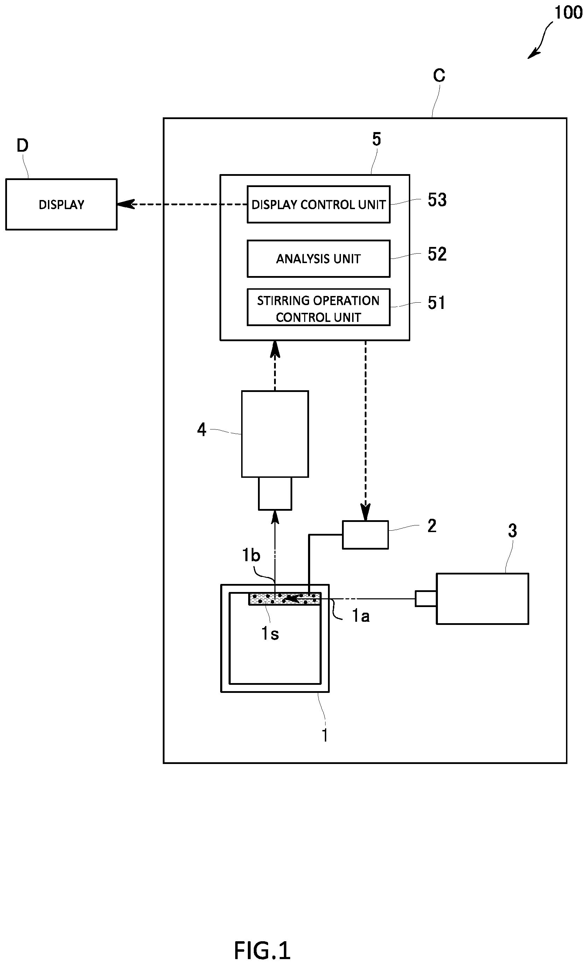

Specifically, as illustrated in FIG. 1, the particle size distribution measuring device 100 includes the measurement cell 1 that accommodates a sample such as a biological sample obtained by dispersing a plurality of particles such as cells in a dispersion medium, a stirring means 2 that stirs the sample accommodated in the measurement cell 1, a light irradiation unit 3 that irradiates the sample in the measurement cell 1 with light, a light detection unit 4 that detects scattered light generated from the sample in the measurement cell 1, and an information processing device 5 that analyzes a detection signal obtained by the light detection unit 4.

The measurement cell 1 is a cuvette type that transmits light. Specifically, the measurement cell 1 has a substantially rectangular parallelepiped shape, a sample accommodation space 1s for accommodating a sample is provided inside the measurement cell 1, and a light intake portion 1a for taking light into the sample accommodation space 1s and a light extraction portion 1b for extracting scattered light generated from the sample from the sample accommodation space 1s to the outside are provided on a side surface of the measurement cell 1. The measurement cell 1 is set at a predetermined measurement position in a housing C of the particle size distribution measuring device 100 in a predetermined direction after a sample is accommodated in the sample accommodation space 1s by a user.

The stirring means 2 is accommodated in the housing C together with the measurement cell 1, and stirs the sample accommodated in the sample accommodation space 1s of the measurement cell 1 in a state where the measurement cell 1 is set at the measurement position. The stirring means 2 is configured to receive a control signal from the information processing device 5 and perform a stirring operation based on the control signal.

The light irradiation unit 3 includes, for example, a laser light source such as a laser diode, and is configured to emit laser light to the light intake portion 1a of the measurement cell 1. The light irradiation unit 3 may include a plurality of laser light sources having different wavelengths.

The light detection unit 4 is configured to image particles by detecting scattered light generated from the particles in the measurement cell 1 by being irradiated with laser light, and is, for example, an imaging camera such as a CCD camera in the present embodiment. The light detection unit 4 is configured to output moving image data as a detection signal. The light detection unit 4 is provided on the light extraction portion 1b of the measurement cell 1 such that its optical axis is located. Here, a light detection direction (specifically, an imaging direction) of the light detection unit 4 and a light irradiation direction of the light irradiation unit 3 are provided orthogonal to each other.

The information processing device 5 is a computer including a CPU, a memory, a display, various input/output devices, and the like, and is connected to the light detection unit 4 in a wired or wireless manner. The information processing device 5 exhibits functions as at least a stirring operation control unit 51, an analysis unit 52, and a display control unit 53 by executing a particle size distribution measuring program stored in the memory.

The stirring operation control unit 51 outputs a control signal to the stirring means 2 to control the stirring operation. Specifically, the start and stop of the stirring operation by the stirring means 2 are controlled. The stirring operation control unit 51 outputs a control signal to the stirring means 2 so that the stirring operation is performed a plurality of times at predetermined intervals on the same sample accommodated in the measurement cell 1.

The analysis unit 52 measures a particle size distribution of the particle group in the sample using the detection signal obtained by the light detection unit 4. Specifically, the analysis unit 52 is configured to acquire moving image data from the light detection unit 4 and calculate a particle size distribution by the PTA method on the basis of the moving image data. More specifically, the Brownian motion of each particle is tracked on the basis of the moving image data, and particle diameters and the number (or concentration) of the particles are calculated on the basis of the Stokes-Einstein equation from the diffusion rate to calculate the particle size distribution.

The analysis unit 52 of the present embodiment is configured to calculate the particle size distribution based on a plurality of pieces of the moving image data acquired for the same sample accommodated in the measurement cell 1. Specifically, the analysis unit 52 acquires the moving image data from the light detection unit 4 every time the sample in the measurement cell 1 is stirred by the stirring means 2 (that is, the stirring is stopped after the stirring is started), calculates the diameters and the number (or concentration) of the particles in a moving image indicated by the moving image data, and calculates the particle size distribution. The analysis unit 52 is configured to calculate the particle size distribution a plurality of times, then integrate the particle size distributions calculated in each time, and output a measurement result indicating the particle size distribution of the particle group included in the sample.

The display control unit 53 causes a display D or the like to display an operation screen of the particle size distribution measuring device 100, a setting screen for performing various settings, a measurement result screen indicating a measurement result, and the like. The display control unit 53 displays setting values (stirring start timing, stirring time, number of times of stirring, and the like) of the stirring means 2, setting values (imaging timing, imaging time, and the like) of the light irradiation unit 3, setting values (imaging timing, imaging time, and the like) of the light detection unit 4, setting values (measurement timing, number of times, and the like) of the analysis unit 52, and the like on the setting screen. Furthermore, the display control unit 53 displays a result of the particle size distribution calculated by the analysis unit 52 on the measurement result screen. Note that the user can change various setting values using a predetermined input interface such as a keyboard.

Thus, in the particle size distribution measuring device 100 of the present embodiment, the stirring means 2 is configured to stir the sample by sucking and discharging the sample in the sample accommodation space 1s of the measurement cell 1.

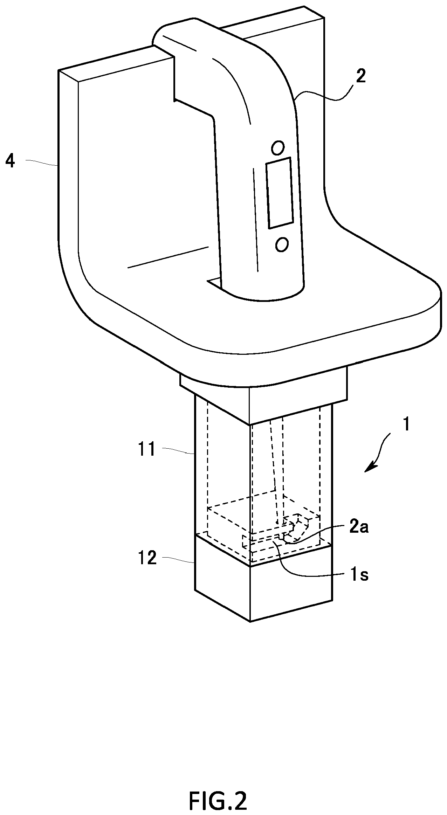

The stirring means 2 includes a common port (referred to as a suction/discharge port 2a) for sucking and discharging the sample, and is accommodated in the housing C such that the suction/discharge port 2a is located in the sample accommodation space 1s. Specifically, as illustrated in FIG. 2, the stirring means 2 is configured using an electric pipette (more specifically, an electric micropipette), and includes a pipette main body 21 and a nozzle portion 22 (pipette tip) attached to the pipette main body 21. The pipette main body 21 incorporates an actuator such as a piston, a power supply circuit, a drive circuit, and the like, and is connected to the information processing device 5 (specifically, the stirring operation control unit 51) in a wired or wireless manner. The nozzle portion 22 has an elongated hollow needle shape, and the suction/discharge port 2a is formed at a distal end thereof.

The stirring operation control unit 51 outputs a control signal to the electric pipette 2 to control a suction operation and a discharge operation (pipetting operation) which are stirring operations of the sample. Note that the stirring operation control unit 51 may control the electric pipette 2 in various operation modes such as a forward method, a reverse method, or a repeat method. The operation mode of the electric pipette 2 may be set by the user on the setting screen described above. For example, in the case of stirring a sample that easily foams, the sample may be stirred by a reverse method.

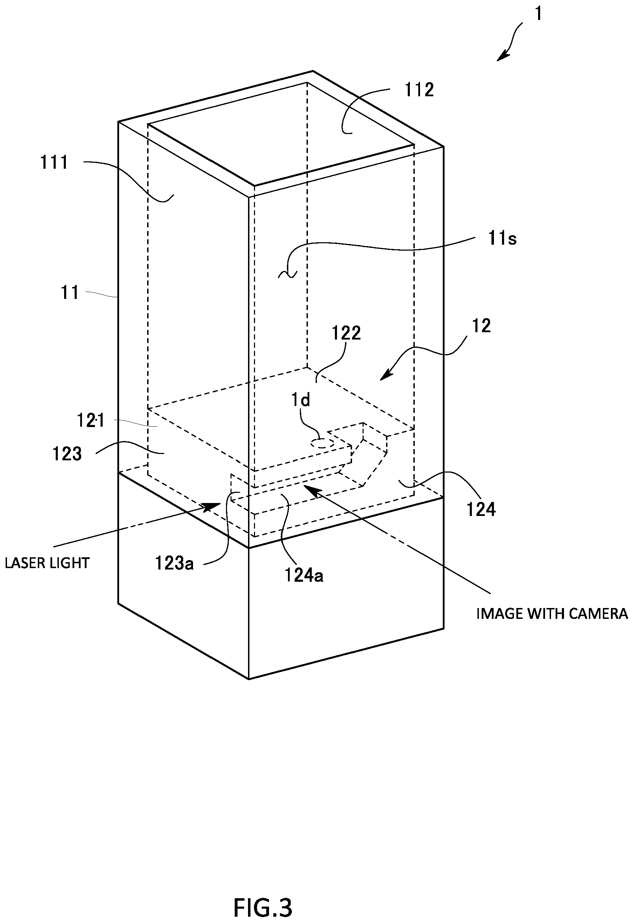

Then, the measurement cell 1 of the present embodiment has a structure suitable for stirring a sample by suction and discharge (pipetting) by the electric pipette 2. Specifically, as illustrated in FIG. 3, the measurement cell 1 includes a cuvette member 11 including an internal space 11s and a block body 12 partially or entirely accommodated in the internal space 11s in the cuvette member 11, and the sample accommodation space 1s is formed in the block body 12.

The cuvette member 11 has a hollow rectangular tube shape made of a transparent material such as plastic or glass. The cuvette member 11 of the present embodiment has a shape in which both end portions (upper end portion and lower end portion) along an axial direction are opened. The cuvette member 11 includes an outer peripheral surface 111 and an inner peripheral surface 112 each having a rectangular shape as viewed in the axial direction.

The block body 12 has a prismatic shape, and is attached to the cuvette member 11 so as to close an opening at the lower end of the cuvette member 11. Specifically, the block body 12 includes a rectangular outer peripheral surface 121 corresponding to the inner peripheral surface 112 of the cuvette member 11, and is attached to the cuvette member 11 by fitting the outer peripheral surface 121 into the inner peripheral surface 112 of the cuvette member 11. Furthermore, here, the inner peripheral surface 112 of the cuvette member 11 and the outer peripheral surface 121 of the block body 11 are bonded to each other using an adhesive, and are configured such that a gap into which the sample 1 enters does not occur therebetween.

The block body 12 of the present embodiment is made of, for example, a metal material such as aluminum or stainless steel. As a result, heat generated by irradiation with laser light can be efficiently released, and thermal damage to a biological sample can be reduced.

The outer peripheral surface 121 of the block body 12 is provided with an irradiated surface 123 irradiated with light from the light irradiation unit 3 and a detected surface 124 on which scattered light is detected by the light detection unit 4. Specifically, the irradiated surface 123 and the detected surface 124 are constituted by two outer side surfaces of the outer peripheral surface 121 of the block body 12 which are orthogonal to and adjacent to each other. In a state where the measurement cell 1 is set at the measurement position in the housing C, the irradiated surface 123 is formed to be orthogonal to the light irradiation direction, and the detected surface 124 is formed to be orthogonal to the light detection direction.

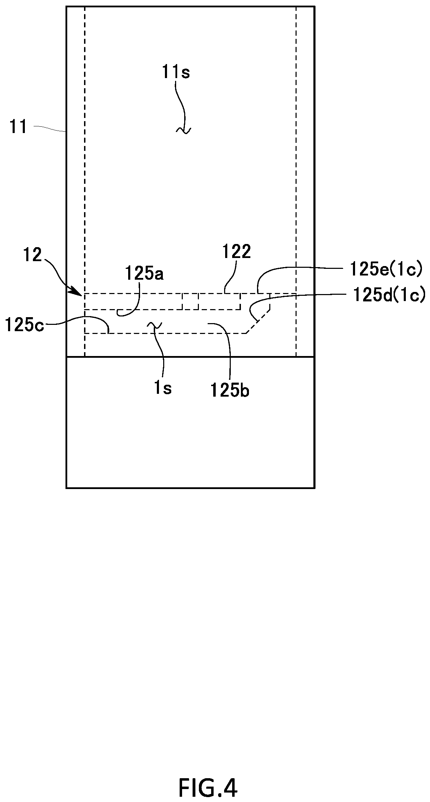

The sample accommodation space 1s is formed in the vicinity of a corner portion where the irradiated surface 123 and the detected surface 124 intersect in the block body 12. As illustrated in FIGS. 3 and 4, the sample accommodation space 1s is formed inside the block body 12 so as to have an elongated shape along a direction orthogonal to the irradiated surface 123 (that is, the light irradiation direction), and has a shape in which an end portion along the light irradiation direction opens to the irradiated surface 123 and an end portion along the light detection direction opens to the detected surface 124. An opening 123a formed in the irradiated surface 123 and an opening 124a formed in the detected surface 124 are formed so as to be connected to each other on an intersection line between the irradiated surface 123 and the detected surface 124, and each of the openings 123a and 124a is covered with the inner surface of the cuvette member 11. In this manner, the sample accommodation space 1s is formed by being surrounded by an upper wall 125a, a side wall 125b, and a bottom wall 125c of an inner wall 125 formed by cutting out the block body 12, and the inner surface of the cuvette member 11 that closes the openings 123a and 124a. A volume of the sample accommodation space 1s is, for example, less than or equal to about 100 µL, preferably less than or equal to about 20 µL, more preferably less than or equal to about 15 µL, still more preferably less than or equal to about 10 µL. Note that the light intake portion 1a described above includes the opening 123a formed in the irradiated surface 123 and a transparent side wall of the cuvette member 11 that covers the opening. Furthermore, the light extraction portion 1b is configured by an opening 124a formed in the irradiated surface 123 and a transparent side wall of the cuvette member 11 that covers the opening.

Furthermore, the measurement cell 1 includes a stray light release portion 1c for releasing stray light generated in the sample accommodation space 1s. The stray light release portion 1c includes an inclined surface 125d provided on the inner wall 125 of the block body 12 forming the sample accommodation space 1s and inclined with respect to the light irradiation direction, and a through hole 125e formed in a regular reflection direction of light from the light irradiation direction by the inclined surface 125d. Here, the inclined surface 125d is formed on the bottom wall 125c so as to be parallel to the light detection direction and inclined upward. The through hole 125e is formed immediately above the inclined surface 125d so as to penetrate the upper wall 125a of the sample accommodation space 1s and open to an upper surface 122.

Furthermore, on the upper surface 122 of the block body 12, a nozzle insertion hole 1d into which the nozzle portion 22 of the electric pipette 2 is inserted is formed. The nozzle insertion hole 1d penetrates the upper wall 125a of the sample accommodation space 1s and opens to the sample accommodation space 1s. The nozzle insertion hole 1d is formed at a position deviated from a principal ray axis of the light (laser light) from the light irradiation unit 3 entering the sample accommodation space 1s when the measurement cell 1 is viewed from above. As a result, it is possible to prevent the laser light from hitting the distal end of the nozzle portion 22 and scattering and being detected by the light detection unit 4. Furthermore, the nozzle insertion hole 1d is formed at a position deviated from an imaging optical axis of the light detection unit 4 when the measurement cell 1 is viewed from above.

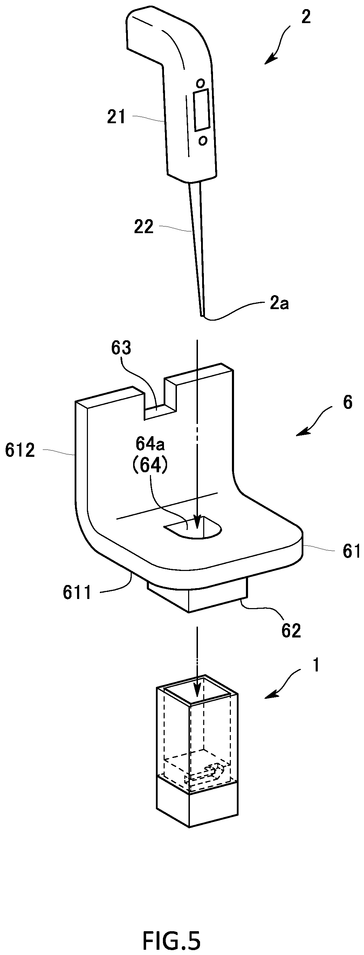

As illustrated in FIGS. 2 and 5, the particle size distribution measuring device 100 according to the present embodiment includes a dedicated attachment jig 6 for attaching the electric pipette 2 to the measurement cell 1. The attachment jig 6 is detachably attached to an upper end of the measurement cell 1 (specifically, the cuvette member 11), and the electric pipette 2 is held by the attachment jig 6. Specifically, the attachment jig 6 includes a lid body 61 that covers and closes an upper end opening of the measurement cell 1, an attachment portion 62 attached to the measurement cell 1, a holding portion 63 that holds the electric pipette 2, and a guide mechanism 64 that guides the distal end of the nozzle portion 22 of the electric pipette 2 to the inside of the sample accommodation space 1s.

The lid body 61 has a substantially plate shape with a lid surface on its lower surface 611, the lid surface covering an opening of the measurement cell 1. By covering the upper end opening of the measurement cell 1 with the lid body 61, evaporation of the sample in the measurement cell 1 can be suppressed. The attachment portion 62 described above is provided on the lower surface 611 of the lid body 61. The attachment portion 62 has a square frame shape, and an inner peripheral surface thereof is externally fitted into the outer peripheral surface 111 of the measurement cell 1 (specifically, the cuvette member 11), whereby the attachment jig 6 is attached to the measurement cell 1.

The lid body 61 has a protrusion 612 protruding upward, and the holding portion 63 for holding the electric pipette 2 is provided at an upper end of the protrusion 612. Specifically, the holding portion 63 is constituted by a recess formed such that a part of the pipette main body 21 of the electric pipette 2 is fitted.

The guide mechanism 64 guides the electric pipette 2 so as to locate the suction/discharge port 2a at a predetermined stirring position (specifically, a position deviated from the principal ray axis of the light (laser light) from the light irradiation unit 3 and the imaging optical axis of the light detection unit 4) in the sample accommodation space 1s when the electric pipette 2 is attached to the attachment jig 6. Specifically, the guide mechanism 64 includes an insertion hole 64a formed so as to penetrate the lid body 61 along the vertical direction, and an inner surface of each of the nozzle insertion holes 1d formed in the block body 12. The insertion hole 64a is formed so as to open at a position facing the internal space 11s of the measurement cell 1 on the lower surface 611 of the lid body 61. When the electric pipette 2 is inserted into the insertion hole 64a from the distal end and the distal end of the nozzle portion 22 is inserted into the nozzle insertion hole 1d, the outer surface of the pipette main body 21 and the inner surface of the insertion hole 64a come into contact with each other, and the outer surface of the nozzle portion 22 and the inner surface of the nozzle insertion hole 1d come into contact with each other, so that the distal end of the nozzle portion 22 is guided toward the stirring position in the sample accommodation space 1s.

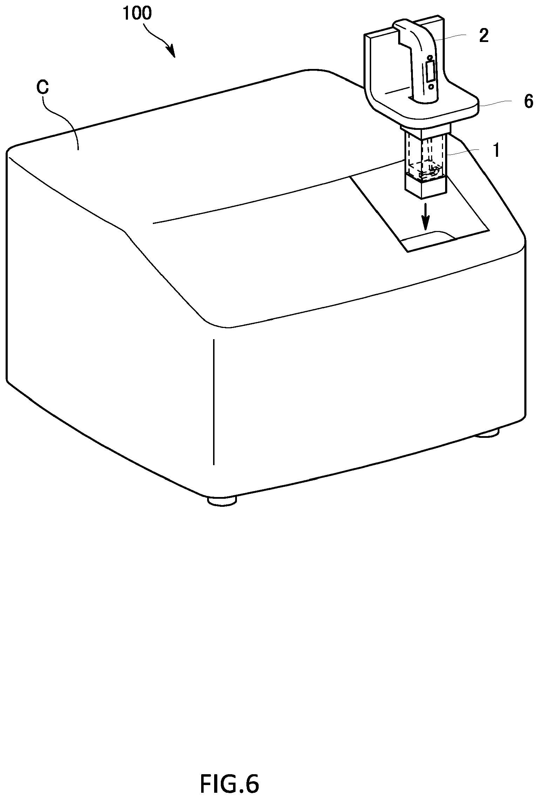

As illustrated in FIG. 6, the measurement cell 1 is set at a predetermined position in the housing C of the particle size distribution measuring device 100 in a state where the electric pipette 2 is attached via the attachment jig 6. As described above, by setting the electric pipette 2 used for weighing the sample and injecting the sample into the measurement cell 1 as it is in the housing C of the particle size distribution measuring device 100 together with the measurement cell 1, the risk of contamination can be reduced as compared with a configuration in which the electric pipette 2 is fixed and provided in the housing C.

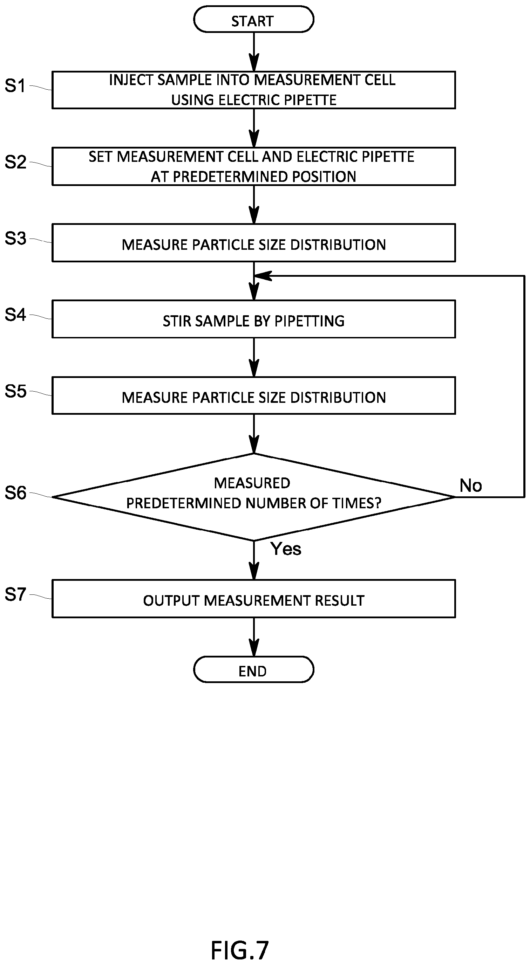

Next, a particle size distribution measuring operation by the particle size distribution measuring device 100 will be described with reference to FIG. 7.

First, after measuring the sample with the electric pipette 2, the user attaches the electric pipette 2 to the measurement cell 1 via the attachment jig 6, and operates the electric pipette 2 to inject the sample into the sample accommodation space 1s (step S1). After the sample is injected into the measurement cell 1, the measurement cell 1 is set in a predetermined direction in the housing C of the particle size distribution measuring device 100 with the electric pipette 2 attached via the attachment jig 6 (step S2).

After setting the measurement cell 1 and the electric pipette 2, for example, various settings, the number of measurements, and the like for the electric pipette 2, the light irradiation unit 3, and the light detection unit 4 are performed on the setting screen, and when the user clicks a measurement start button or the like on the operation screen, the particle size distribution measuring device 100 operates according to a predetermined measurement sequence and starts measurement of the particle size distribution of the particle group in the sample.

Specifically, first, the measurement cell 1 is irradiated with laser light from the light irradiation unit 3, scattered light generated from particles in the sample is detected by the light detection unit 4, and the particle size distribution is calculated by calculating the diameter and the number of particles in the moving image indicated by the moving image data output from the light detection unit 4 (step S3).

After calculating the diameter and the number of particles, the stirring operation control unit 51 outputs a control signal to the electric pipette 2 to perform pipetting, thereby stirring the sample in the sample accommodation space 1s (step S4). After the pipetting by the electric pipette 2 is completed, the measurement cell 1 is irradiated with laser light again from the light irradiation unit 3, scattered light generated from particles in the sample is detected by the light detection unit 4, and the particle size distribution is calculated by calculating the diameter and the number of particles in the moving image indicated by the moving image data output from the light detection unit 4 (step S5). Note that, after the pipetting by the electric pipette 2 is completed, the scattered light may be detected by the light detection unit 4 after the flow of the sample is sufficiently settled after a predetermined waiting time.

When the stirring of the sample by the electric pipette 2 and the subsequent calculation of the particle size distribution are repeated a predetermined number of times, the analysis unit 52 integrates the particle size distributions calculated each time and outputs a measurement result indicating the particle size distribution of the particle group included in the sample (steps S6 and S7).

According to the particle size distribution measuring device 100 of the present embodiment as described above, since the sample is stirred using the electric pipette 2 which is the stirring means 2 capable of suction and discharge, it is only required to accommodate an amount of sample in which the suction/discharge port 2a for performing suction and discharge is immersed in the sample accommodation space 1s of the measurement cell 1, and thus even a small amount of sample can be stirred in the measurement cell 1. Furthermore, since the electric pipette 2, which is the stirring means 2, gently stirs the sample by performing suction and discharge, stress applied to the particles in the sample can also be reduced. Therefore, the present invention can also be applied to a biological sample in which measurement with a minute volume is required and stress applied during stirring is desirably suppressed.

### <Other modified embodiments>

Note that the present invention is not limited to the above embodiment.

For example, in the above embodiment, the electric pipette 2 is used as the stirring means 2, but is not limited thereto. The stirring means 2 may be any means as long as it can suck and discharge from the common port, and may be, for example, a manual pipette, a syringe, an electric pump, or the like.

Furthermore, in the above embodiment, the electric pipette 2 as the stirring means 2 is held in the measurement cell 1 via the attachment jig 6, but is not limited thereto. In another embodiment, a stirring means 2 may be held by a predetermined holding means or the like provided in a housing C of a particle size distribution measuring device 100, or may be fixed and installed in the housing C.

Furthermore, in another embodiment, a kit for the particle size distribution measuring device 100 including the measurement cell 1 and the attachment jig 6 for attaching the pipette 2 to the measurement cell 1 may be used. Furthermore, in the kit for the particle size distribution measuring device 100, an attachment jig 6 may not be detachably attached to the measurement cell 1, and the attachment jig 6 and the measurement cell 1 may be integrated. Moreover, the kit for the particle size distribution measuring device 100 may include an electric pipette 2, and the electric pipette 2 and the attachment jig 6 may be integrated.

Furthermore, in the above embodiment, the measurement cell 1 includes only one sample accommodation space 1s, but is not limited thereto. In another embodiment, a measurement cell 1 may include a plurality of sample accommodation spaces 1s. For example, each of the sample accommodation spaces 1s may be formed at each of a plurality of corners of the main body block. The plurality of sample accommodation spaces 1s is preferably formed so as to be rotationally symmetric about an axis of the measurement cell 1.

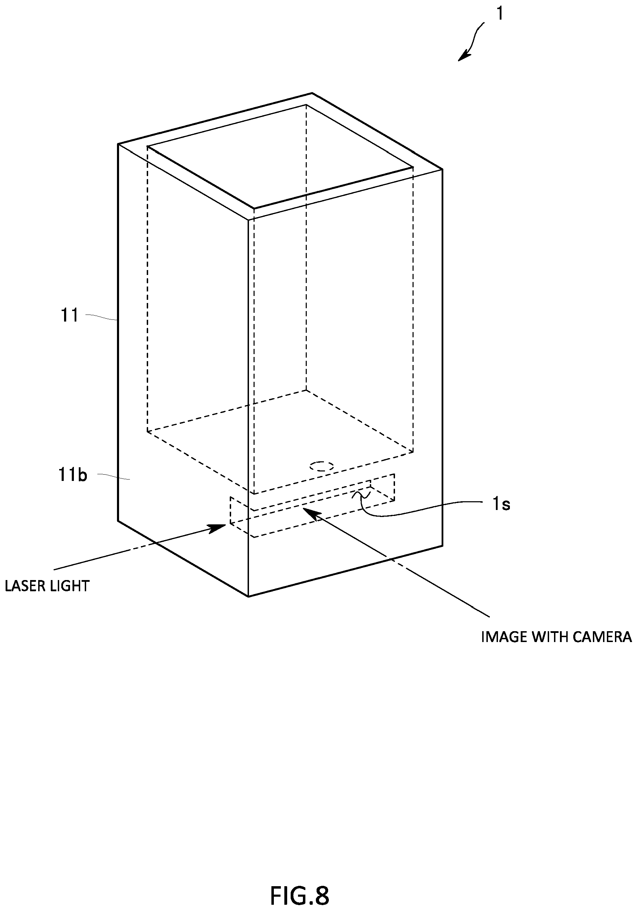

Furthermore, the measurement cell 1 of the above embodiment includes the cuvette member 11 and the block body 12 attached thereto, and the sample accommodation space Is is formed in the block body 12, but is not limited thereto. As illustrated in FIG. 8, for example, a measurement cell 1 of another embodiment includes a bottomed cylindrical cuvette member 11 entirely made of a transparent resin, and a sample accommodation space 1s may be formed in a thick bottom portion of the cuvette member 11. In this way, since the entire measurement cell 1 is transparent, stray light generated in the sample accommodation space 1s passes through the wall and escapes, so that it is not necessary to provide the inclined surface 125d and the through hole 125.

Furthermore, the upper portion of the sample accommodation space 1s is covered with the upper wall 125a, but the present invention is not limited thereto. In another embodiment, an upper portion of a sample accommodation space 1s is opened without being covered by the upper wall 125a, and may be continuous with an internal space 11s of a cuvette member 11. In this way, when the sample bubbles due to the suction operation and the discharge operation of a stirring means 2, the bubble removal can be improved.

Furthermore, the particle size distribution measuring device 100 according to the above embodiment calculates the particle size distribution every time the sample is stirred, and stirs the sample after the calculation, but is not limited thereto. A particle size distribution measuring device 100 of another embodiment may stir the sample when scattered light is detected by a light detection unit 4 after stirring the sample. Furthermore, it is not necessary to calculate the particle size distribution every time the sample is stirred, and the particle size distribution may be calculated collectively on the basis of a plurality of pieces of acquired moving image data after stirring of the sample and acquisition of the moving image data are performed a plurality of times.

Furthermore, in another embodiment, a display control unit 53 may cause a display D to display a check result indicating whether a measurement cell 1, an attachment jig 6, or an electric pipette 2 is set at a correct position.

Furthermore, the particle size distribution measuring device 100 of the embodiment detects scattered light generated by irradiating the particles with light, but is not limited thereto. In another embodiment, a particle to be measured may be stained with a fluorescent substance, the particle may be irradiated with light having an excitation wavelength from a light irradiation unit 3, and fluorescent light generated from the particle may be detected. In this case, an optical filter that does not transmit the excitation wavelength but transmits the fluorescence wavelength may be provided in front of a light detection unit 4.

Furthermore, the particle size distribution measuring device 100 of the above embodiment uses the PTA method, but is not limited thereto. A particle size distribution measuring device 100 according to another embodiment may be of a laser diffraction/scattering type that measures a particle size distribution of a group of particles by detecting diffracted light or scattered light generated when the particles are irradiated with light by a light detection unit 4. In this case, the light detection unit 4 may be configured to include a plurality of light detectors so that the light intensity of the diffracted/scattered light generated by the irradiation of the laser light can be detected according to a spread angle.

Furthermore, the particle size distribution measuring device 100 of the above embodiment measures a biological sample containing cells as particles, but is not limited thereto. A particle size distribution measuring device 100 of another embodiment can also be applied to a biological sample containing organic particles such as microorganisms, intracellular organelles (Microendoplasmic reticulum, nucleus, Golgi apparatus, mitochondria, chloroplasts, etc.), apoptotic bodies, extracellular endoplasmic reticulum (EV), receptors, ligands, antagonists, agonists, nucleic acids, antibodies, proteins, peptides, amines, other biological substances, viruses, inorganic particles, polystyrene beads, and the like.

Furthermore, a particle size distribution measuring device 100 of another embodiment can be applied not only to a biological sample but also to any sample such as a CMP slurry, an ink, or a positive electrode material or a negative electrode material for a lithium ion battery.

In addition, the present invention is not limited to the above embodiments, and it goes without saying that various modifications can be made without departing from the gist of the present invention.

### Industrial Applicability

According to the present invention, even a small amount of sample can be stirred in a measurement cell in particle size distribution measurement.

### Reference Signs List

- 100: particle size distribution measuring device
- 1: measurement cell
- 1s: sample accommodation space
- 2: stirring means
- 2a: suction/discharge port
- 3: light irradiation unit
- 4: light detection unit
- 52: analysis unit

## Claims

1. A particle size distribution measuring device comprising:
a measurement cell including a sample accommodation space that accommodates a sample obtained by dispersing a plurality of particles in a dispersion medium;
a stirring means that stirs the sample by sucking and discharging the sample in the sample accommodation space;
a light irradiation unit that irradiates the sample in the sample accommodation space with light;
a light detection unit that detects scattered light or fluorescent light generated from the sample irradiated with light; and
an analysis unit that measures a particle size distribution of a particle group including the plurality of particles using a detection signal obtained by the light detection unit.

2. The particle size distribution measuring device according to claim 1, further comprising an operation control unit that controls a suction operation and a discharge operation by the stirring means.

3. The particle size distribution measuring device according to claim 1 or 2, wherein stirring of the sample by the stirring means and measurement of the particle size distribution by the analysis unit are repeated a plurality of times.

4. The particle size distribution measuring device according to any one of claims 1 to 3, wherein the stirring means is configured using a pipette.

5. The particle size distribution measuring device according to claim 4, further comprising
an attachment jig that attaches the pipette to the measurement cell,
wherein the pipette is held by the attachment jig such that a distal end of a tip of the pipette is located in the sample accommodation space.

6. The particle size distribution measuring device according to claim 5, wherein the attachment jig includes a guide mechanism that guides a suction/discharge port of the pipette to suck and discharge the sample toward a predetermined position in the sample accommodation space when the pipette is attached.

7. The particle size distribution measuring device according to any one of claims 1 to 6, wherein the measurement cell includes a cuvette member including an internal space, and a block body accommodated in the internal space of the cuvette member, and the sample accommodation space is formed in the block body.

8. The particle size distribution measuring device according to any one of claims 1 to 7, wherein a volume of the sample accommodation space is less than or equal to 10 µL.

9. The particle size distribution measuring device according to any one of claims 1 to 8, wherein the sample is a biological sample.

10. A method of measuring a particle size distribution of a particle group including a plurality of particles in a sample accommodated in a measurement cell, the method comprising:
a stirring step of stirring the sample by sucking and discharging the sample in the measurement cell;
a light irradiation step of irradiating the sample in the measurement cell with light;
a light detection step of detecting scattered light or fluorescent light generated from the sample irradiated with light; and
an analysis step of measuring a particle size distribution of the particle group using a detection signal obtained by the light detection unit.

11. The method of measuring a particle size distribution according to claim 10, wherein the stirring step, the light detection step, and the analysis step are repeated a plurality of times for the same sample.

12. The method of measuring a particle size distribution according to claim 10 or 11, further comprising:
a sample injection step of injecting the sample into the measurement cell using a pipette; and
an installation step of installing the pipette and the measurement cell at a predetermined measurement position,
wherein in the stirring step, the sample is stirred by pipetting using the pipette.

13. A program for a particle size distribution measuring device comprising: a measurement cell including a sample accommodation space that accommodates a sample obtained by dispersing a plurality of particles in a dispersion medium; a stirring means that stirs the sample by sucking and discharging the sample in the sample accommodation space; a light irradiation unit that irradiates the sample in the sample accommodation space with light; a light detection unit that detects scattered light or fluorescent light generated from the sample irradiated with light; and an analysis unit that measures a particle size distribution of a particle group including the plurality of particles using a detection signal obtained by the light detection unit, the program causing a computer to exhibit a function as a stirring operation control unit that controls an operation of suction and discharge of the sample by the stirring means.

14. A kit for a particle size distribution measuring device that measures a particle size distribution of a particle group including a plurality of particles dispersed in a dispersion medium, the kit comprising:
a measurement cell including a sample accommodation space that accommodates a sample obtained by dispersing the particle group in a dispersion medium; and
an attachment jig that attaches a pipette to the measurement cell such that a distal end of a tip of the pipette is located in the sample accommodation space.
